Europäisches Patentamt

European Patent Office

Office européen des brevets

(19)

(11) Publication number: **0 269 015**
**A2**

(12) **EUROPEAN PATENT APPLICATION**

(21) Application number: 87117144.3

(22) Date of filing: 20.11.87

(51) Int. Cl.4: **C04B 28/04** , C04B 24/38 ,
//(C04B28/04,14:06,18:14,24:38)

(30) Priority: 21.11.86 US 933710

(43) Date of publication of application:
01.06.88 Bulletin 88/22

(84) Designated Contracting States:
AT BE CH DE ES FR GB GR IT LI NL SE

(71) Applicant: Henkel Corporation
300 Brookside Avenue
Ambler PA 19002(US)

(72) Inventor: Maier, Helmut K.
115 Florida Ct.
Golden Valley, MIN 55426(US)
Inventor: Setnoien, Mark D.
1302 Circle Terrace
Columbia Heights, MIN 55421(US)

(74) Representative: von Kreisler, Alek et al
Patentanwälte Von Kreisler-Selting-Werner
Deichmannhaus am Hauptbahnhof
D-5000 Köln 1(DE)

(54) **Sag resistant dry set mortar composition.**

(57) Disclosed are dry set mortar compositions having improved non-sag properties, while retaining properties such as workability, adhesion and long open time. In particular, these properties are achieved by the use of finely divided silica, such as fumed or precipitated silica, as an anti-sag agent in combination with certain carbohydrate polymers, as water retention agents such as cellulose ethers or mixtures thereof with natural gums, such as the polygalactomannan gums. The mortar composition is also comprised of the usual Portland cement and an inert filler such as sand and may also contain latex binders found in many conventional mortar compositions.

EP 0 269 015 A2

## SAG RESISTANT DRY SET MORTAR COMPOSITION

### BACKGROUND OF THE INVENTION

#### Field of the Invention

This invention relates to dry set mortar compositions having improved non-sag or anti-sag properties, while retaining properties such as workability, adhesion and long open time. In particular, these properties are achieved by the use of finely divided silica such as fumed or precipitated silica, as an anti-sag agent in combination with certain carbohydrate polymers as water retentive agents, such as cellulose ethers or mixtures thereof with natural gums, such as the polygalactomannan gums. The mortar composition is also comprised of the usual Portland cement and an inert filler such as sand. Conventional mortar compositions often also contain a latex binder.

#### Description of Related Art

Dry set mortars are recognized in the art as compositions distinguished from other hydraulic cement compositions. Conventional mortars generally contain a hydraulic cement, such as Portland cement, sand and water. The hydraulic cement component requires water in order to cure or harden. As a result, conventional mortars often times are not entirely self-curing because they tend to lose considerable amounts of water by evaporation into the surrounding air and also by absorption into the tile or masonry being set. Where the water loss is too great, the curing action is incomplete and the mortar becomes soft and chalky.

By increasing the proportion of water in the mortar to counteract the water loss, the mortar becomes too thin to work properly. A high water to mortar ratio also leads to cracking due to excess shrinking of of the mortar during curing. To insure sufficient water for hardening conventional mortars, wet conditions must be maintained on the substrate over which the mortar is placed and in the atmosphere surrounding the area during the period of curing. For example, where non-vitreous absorbent tile are set, the loss of water is even greater, often requiring the non-vitreous tile to be wetted before being set.

As discussed in U.S. Patent 4,211,572, dry set mortars are distinguished from conventional cementitious compositions because they additionally contain water retentive agents which tend to prevent the loss of substantial amounts of water from the mortar to the surroundings during the curing stages. As used herein, the term "dry set mortar" is used in its broadest sense to include a mixture of hydraulic cement such as Portland cement, with additives imparting water retentivity. In this patent, reference is made to dry set mortars as described in U.S. Patent Nos. 2,820,713; 2,934,932; 2,990,382; 3,030,258 and 3,243,707. In making reference to U.S. Patent 3,030,258 a dry set mortar is described having water retentive properties when it contains a methylcellulose of 10-7000 cPs viscosity grade in 2% solution and quantities of 0.2-6.5% based on the dry weight of the composition. In making reference to U.S. Patent, 3,243,307, hydroxyethylcellulose is taught as more effective than methylcellulose because less hydroxyethylcellulose is required to provide the same water retentive properties. The greater effectiveness of the hydroxyethylcellulose is attributed to its higher viscosity.

A property required by mortar for setting tile on a vertical surface is that it be sag resistant. Sag resistance is a term used in the trade and defined by a test method that is part of the American National Standards Specification for Dry set Portland Mortar Cement - A118.1. Sag resistance is a property or a characteristic relating to the ability of the mortar to resist movement under load until a certain load level is reached. This property or characteristic is important in dry set mortars, since a mortar to be practically functional must be in a slurry or paste form on the one hand, but also must be capable of supporting the load imposed on it by the tiles being set on a vertical wall. The mortar must hold the tile in position on the wall during the period in which the mortar is setting.

For a time, asbestos fibers or similar fiber materials were employed to provide mortars with sag resistance. While such are suitable for providing non-sag or anti-sag properties, asbestos fibers and mineral fibers in general have been found to be dangerous to the health of persons who ingest them into their lungs and the use thereof has recently been limited.

As a replacement for asbestos fibers in providing dry set mortars with sag-resistant properties, various additives were developed to provide such properties, included amoung these are certain clays and certain long chain organic polymers, alone or in combination with the clays. Thus, in U.S. Patent 4,043,827, there is disclosed the use of certain clays such as attapulgite and montmorillonite clays, along with long-chain polymers such as acrylamides, ethylene oxide, alkali metal salts of carboxymethyl cellulose starch and starch derivatives. In this patent, conventional Portland cement mortar compositions are described as utilizing a water-soluble cellulose ether such as methylcellulose, methyl hydroxypropyl cellulose or hydroxyethyl cellulose. Similarly, U.S. Patent 4,082,563 discloses compositions containing water-soluble high molecular weight polymers such as the cellulose ethers.

In another U.S. Patent, 4,011,094, the use of magnesium oxides are disclosed along with water-retentive cellulose materials in order to provide sag resistant properties.

While not relating specifically to a mortar composition, U.S. Patent 4,447,267 relates to dry set grouting compositions containing Portland cement, a limestone filler, cellulose ether, along with longchaing organic polymers such as hydroxyalkyl starch and polyacrylamide. In the examples thereof are disclosed compositions composed of Portland cement, limestone as a filler, methylcellulose as a water-retentive agent and fumed silica. No specific properties or characteristics of the fumed silica are disclosed and as the compositions were grout compositions, where anti-sag properties are not required as they are with dry set mortar compositions, there is no discussion of non-sag or anti-sag properties.

Finely divided silica, such as precipitated or fumed silica, has been employed in various cementitious materials in the past. Thus, U.S. Patnet 4,505,753 disclosed a cementitious composite material employing chemically active silica, such as tiny spherical particles of amorphous silica known as condensed silica fume. No cellulose ether component is disclosed therein. In U.S. Patent 4,504,320, the use of amorphous, non-crystalline, pozzolante silicon dioxide is disclosed, preferably condensed silica fume. In U.S. Patent 4,501,830, a rapid set lightweight cement product is disclosed which includes mixtures of silica fume with crystalline silica particles.

The foregoing patents are illustrative of some of the applications in which fumed silica has been employed in cementitious products. However, none of the references disclose that the use of finely divided silica particles such as fumed silica provide non-sag or anti-sag properties to a dry set mortar composition.

## SUMMARY OF THE INVENTION

It has now been found that new, improved, highly sag-resistant dry set mortar can be provided without sacrificing any of the other properties such as workability, adhesion, strength and long open time. Briefly, the invention is concerned with a dry set mortar composition comprised of a Portland cement and an inert filler, a water-retentive agent and certain fine particle size silica employed in the composition. More particularly, the invention is concerned with a dry set mortar composition adapted to be mixed with water to a workable consistency which contains Portland cement, filler, water-retentive agent and finely divided silica wherein the finely divided silica provides non-sag properties. The water-retentive agents are carbohydrate polymers selected from the gorup of cellulose ethers, polygalactomannan gums such as guar and locust bean gum (either natural unmodified or derivatized) and mixtures thereof with the cellulose ethers. In its broadest aspect, the invention is concerened with a cementitious mortar composition containing the usual conventional materials for mortar compositions, Portland cement, and an inert filler such as sand, along with a water-retentive agent which is a natural carbohydrate polymer selected from the group of cellulose ethers, and mixtures thereof with natural gums and with about 0.1-5% by weight of the dry composition of finely divided silica. A more preferred embodiment of the invention is one in which the finely divided silica is non-crystalline and is 100% amorphous silica, such as fumed or precipitated silica.

In its narrowest aspect, the dry set mortar composition of the present invention consists essentially of about 60% sand, between 35-40% Portland cement, 0.4-0.6% cellulose ether as a water-retentive agent and about 0.1-0.5% fine particle size silica such as fumed or precipitated silica.

## DETAILED DESCRIPTION AND PREFERRED EMBODIMENTS

As indicated earlier, the present invention contains the usual mortar ingredients or components; primarily Portland cement and sand. Any of the various grades of Portland cement which are commercially available are suitable for the production of the dry set mortar composition of the present invention.

The inert filler is generally employed to add bulk to the mortar. Accordingly, a variety of fillers may be used, the most common being sand, although other inert materials such as limestone, rock, stone or other inert inorganic materials may be employed as the filler. The particular type of filler and optimal amounts thereof to be employed will depend on the particular application and are readily determined by one skilled in the art.

In mortar compositions a water-retentive agent is employed. For the purposes of this invention, the water-retentive agent is carbohydrate polymer selected from the group consisting of cellulose ethers, employed alone or in admixture thereof with a natural gum such as a polygalactomannan gum, unmodified or a derivative form. Illustrative of the most common polygalactomannan gums are the guar and locust bean gums. The cellulos ethers generally employed as water-retentive agents include methylcellulose, hydroxyethyl cellulose, hydroxypropyl cellulose, methyl hydroxypropyl cellulose, ethylhydroxy ethyl cellulose, hydroxybutyl methyl cellulose, carboxymethyl cellulose, carboxymethyl methyl cellulose, hydroxyethyl hydroxypropyl methyl cellulose, methyl hydroxyethyl cellulose, hydroxyethyl-hydroxypropyl cellulose and the like. Of these methylcellulose (MC), methyl hydroxpropyl cellulose (MHPC) and methyl hydroxyethyl cellulose (MHEC) are preferred on the basis of performance and availability. While the molecular weight of the carbohydrate polymer is not especially critical, it has been found that when cellulose ethers are employed, performance thereof is optimized when the cellulose ether exhibits a viscosity of about 1,000-100,000, preferably 4000-75,000 centipoises as a 2 weight percent solution in water at 20°C.

Often a latex additive is employed in the mortar composition to improve adhesion and bonding to certain surfaces. Suitable additives are polyvinyl alcohol (PVA), polyvinyl acetate (PVAc), acrylic polymers and the like in liquid latex form or as a redispersible powder.

The silica (the silicon dioxide) employed in the present invention is a finely divided silica, preferably an amorphous, non-crystalline silicon dioxide which possesses a fine particle size and high surface area. Illustrative thereof are the fumed or precipitated silicas. Such fumed or precipitated silicas are known to those skilled in the art and are readily commercially available. As used herein, reference to "fumed silica" or "precipitated silica" is meant such silicon dioxide materials which are preferably amorphous non-crystalline silica having a surface area in the range of 50-700m²/g and average agglomerate particle size less than 100μm and preferalby less than 8μm. A large variety of such materials are available from Degussa Corporation, having an office in Teterboro, New Jersey, 07608. Such products usually available are amorphous non-crystalline products having a BET surface area measured by DIN 66131 of from 60-700 m²/g with an average agglomerate size measured by Coulter counter of about 2-100μm, or an average particle size of from 5-50 nanometers. The product will analyze as 98-99.5% $SiO_2$ with small amounts of $Na_2O$, $Fe_2O_3$ and $SO_3$ on the order of about 0.3-1.0, 0.01-0.03, and 0.1-0.8 respectively. As indicated earlier, the finely divided silica is employed in an amount of about 0.1-5% by weight of the dry composition, preferably about 0.1-0.5%.

The basic dry set mortar composition which is adapted to be mixed with water to a workable consistency, is accordingly composed of 4 components or ingredients, namely (a) Portland cement, (b) inert filler, preferably sand, (c) a water-retentive agent and (d) fine particle sized silica. To this basic composition can be added other additives for special applications, which however would not affect the basic composition or its non-sag properties. In the basic composition, which consists essentially of the four components noted above, the Portland cement will be employed in an amount of at least 20% by weight of the basic dry set mortar composition. The Portland cement would be employed preferably in an amount of 60% or less and more preferably less then 45% by weight. Thus a more desirable general range is in the order of 30-50% by weight with a preferred amount of 35-45%.

The inert filler is preferably sand, which may be employed in an amount up to about 75% by weight of the dry composition. The amount of sand to be employed would be an amount such as to provide a workable consistency to the mortar composition. Generally, the amount of sand will be at least 50% of the composition up to about 65% with about 50-60% being preferred while employed with the cellulose ether as a water-retentive agent and the fumed silica as set forth for the present invention. Thus, a desirable general range of 40-65%, preferably about 50-60%, will be employed.

As discussed earlier, the water-retentive agents used in the present invention are carbohydrate polymers selected from the group of cellulose ethers and mixtures thereof with a natural, unmodified or derivatized polygalactomannan gum. The preferred polygalactomannan gums where employed are guar gum and locust bean gum. The water-retentive agent, however, preferably should be composed of the cellulose ether in a major amount of about 70%. Thus, the polygalactomannan gum may be employed in an amount up to 30% by weight of the total of cellulose ether and gum components. The cellulose ether will accordingly be present in excess of twice the amount of the natural gum. The water-retentive agent will be employed in an amount of about 0.01-2.0 and desirably about 0.2-1.0%, with 0.4-0.6 being preferred, by weight of the dry mortar composition, whether employed as a cellulose ether, alone or in combination with a natural polygalactomannan gum.

As indicated, the dry mortar composition is adapted for admixture with water. The relative amounts of

4

water and dry mortar composition are such that a workable consistency is obtained. In general, this will require less than about 35% water based on the amount of dry mortar composition. Preferably. less than 28% water is desirable with the most preferred amounts being on the order of about 25-27%. Thus, with 100 parts by weight of dry composition which is composed of the sand, Portland cement. cellulose ether and fumed silica, about 25-28 parts of water will be employed. The ratio of water to cement preferably is 0.6 or less.

The invention might best be illustrated by means of the following examples in which all parts and percentages are by weight, unless otherwise noted. In each of the examples, unless otherwise noted, the sand was Ottawa Bond Silica sand. The Portland cement employed was Northwestern Portland I, or Huron White Portland I, designated in the examples as NP or HW. The cellulose ethers employed in the examples were commercially available cellulose ethers from Henkel Corporation supplied under the trademark "Culminal", or from Dow Chemical under the trademark "Methocel". The polygalactomannan gums are commercially available from Henkel Corporation, supplied under the trademark "Galactasol".

Samples of fumed or precipitated silica employed in examples, are available from Degussa Corporation. These products are described in Technical Bulletin of Degussa dated July 1984 entitled "Precipitated Silicas and Silicates". Two of these employed in Examples 1 and 2 are "Ultrasil" VN 3S SP and FK 320 DS, which have the following properties:

|  | FK 320 DS | "Ultrasil" VN 3 SP |
|---|---|---|
| BET Surface Area (1) $m^2/g$ | 170 | 185 |
| Average Agglomerate Size (2) $\mu m$ | 4.5 | - |
| Tapped Density (3) g/l | 80 | 260 |
| lbs/c.ft. | 5 | 16.3 |
| pH (4) | 6.3 | 6.3 |
| Moisture (2 hrs. at 105°C) (5) % | 6 | 5.5 |
| Ignition Loss (2 hrs. at 1000°C) (6) % | 5 | 5 |
| Analysis (based on material ignited 2 hrs. at 1000°C). | | |
| $SiO_2$ | 98 | 98 |
| $Na_2O$ | 1.0 | 1.0 |
| $Fe_2O_3$ | 0.03 | 0.03 |
| $SO_3$ | 0.8 | 0.08 |

(1)  DIN 66131
(2)  Measured by Coulter Counter (100$\mu m$ aperture)
(3)  DIN 53194 (without sieving) or ISO 787/XI
(4)  DIN 53200 (5% silica/water dispersion) or ASTM D1208 or ISO 787IX
(5)  DIN 55921 or ASTM D1208
(6)  Based on material dried for 2 hours at 105°C.

The sag resistance was measured substantially as described below.

Sag Test Procedure:

1. Hand mix 500g of thin set dry mix with water to proper mortar consistency, then allow the mortar to slake for 30 minutes:
NOTE: Proper consistency shall be determined by following manufacturer's instructions when available and other wise by the best judgment of the operator. In general, the mortar shall be easily trowelable using a notched trowel to form ridges which do not sag or spread. In addition, when a tile is pressed into the freshly troweled mortar with ~ 1 psig pressure, the mortar shall adhere to at least 90% of the rear surface of the tile.

2. Apply the slaked mortar to a non-absorbent substrate made of polyvinly chloride (PVC). Using a 1/4" x 1/4" square notched trowel, comb the mortar into ridges of 3/16" depth.

3. Place a 4" x 4" vitreous ceramic tile onto the freshly troweled mortar and press the tile into the mortar by placing a 2 kg mass onto the tile for a period of 30 seconds. The ridges of the tile shall be parallel to the mortar ridges. The tile shall weigh 200 g ± 2 g. Mark the position of the top of the tile by scribing a line in the mortar. Remove all mortar from the substrate in the direction the tile will sage.

4. Raise the substrate to a vertical position such that the mortar ridges are also vertical. Do not shake or bump the assembly during this process. Mainain the vertical position for exactly 10 minutes, allowing the tile to sag freely under its own weight.

5. Measure the total displacement of the tile during the 10 minute sag period. Report the sag to the nearest millimeter.

Pry the tile from the substrate and examine the extent of mortar adhesion to the rear surface. Estimate the % coverage of the rear surface of the tile and report the results as <90%, 90%, 95%, 99% or 100%.

EXAMPLE 1

Two mortar compositions were prepared employing the following ingredients in the amounts noted.

## TABLE I

| | Sample | |
| --- | --- | --- |
| | A | B |
| Sand (Ottawa Bond silica sand) | 300.0 g. | 300.0 g. |
| Portland Cement (Huron White) | 187.5 g. | 157.5 g. |
| Fumed Silica (Degussa FK 320DS) | 10.0 g. | 40.0 g. |
| Water Retentive agent (Mixture of 85% MHEC of about 25,000 centipoises at 2% in water and 15% guar gum) | 2.5 g. | 2.5 g. |
| Water (deionized) | 150.0 g. | 250.0 g. |

Mortar A had good workability. Mortar B was stiff and did not trowel well despite an undesirably high water content and accordingly was a less desirable mortar. Both dry set mortar compositions however had near 0 sag, mortar A measuring only 1-2 mm.

EXAMPLE 2

Ten mortar compositions were prepared employing the ingredients and amounts shown in Table II below.

## Table II

| Ingredient | 1 | 2 | 3 | 4 | 5 | 6 | 7 | 8 |
|---|---|---|---|---|---|---|---|---|
| Sand (Ottawa Bond) | 300 | 300 | 300 | 300 | 300 | 300 | 300 | 300 |
| Portland Cement I (Northwestern) | 175 | 195 | 188 | 188 | 193 | 183 | 195.5 | 180.5 |
| Water Retentive Agent (Same as Example I) | 2.00 | 2.00 | 2.00 | 2.00 | 2.00 | 2.00 | 2.00 | 2.00 |
| Fumed Silica: | | | | | | | | |
| Ultrasil® VN 3 SP | 25.00 | 5.00 | 10.00 | - | - | 15.00 | - | 17.5 |
| FK 320 DS | - | - | - | 10.00 | 5.00 | - | 2.50 | - |
| Water (deionized) | 175 | 125 | 137.5 | 137.5 | 122.5 | 150 | 117 | 155 |

In the foregoing, the tile coverage was poorest in sample 1, which contained the largest amount of water (about 35% based on dry ingredients), and Ultrasil VN 3 SP (about 5% of dry ingredients) as the silica, though the sag was 0. Samples 2 and 3 using lower levels of Ultrasil VN 3 SP showed little sag resistance. Using the Ultrasil VN 3 SP at intermediate levels, as in samples 6 and 8 (3 and 3.5% respectively) provided adequate tile coverage and 0 sag in sample 8, and very good coverage but with some sag in sample 5, these mortars are considered of borderline desirability. With the Ultrasil VN 3 SP silica, which has a relatively higher density than the FK 320 DS, levels of about 3-4% may be employed with water levels of 30-31%, based on the amount of dry ingredients. The FK 320 DS which has an average agglomerate size of about 4.5 μm and a density of less than 100 g/l, lower amounts provides desirable results at lower levels of 1-2% based on the dry composition and at preferred water levels, in the range of about 23-28% water based on the amount of dry ingredients.

EXAMPLE 3

Additional samples were prepared, designated as 9 and 10 below, to evaluate the open time (the time at which the mortar composition remains workable). The samples, with and without the fumed silica, showed the same open time (60 minutes). The samples were then repeated and the sag resistance determined. In both instances the coverage was good, but the fumed silica sample showed a sag of only 2 mm, whereas the sample without the silica showed a sag of 60 mm, an unsatisfactory degree of sag. The compositions were as follows:

Table III

| Ingredient | 9 | 10 |
|---|---|---|
| Ottawa Bond Sand | 300.0 | 300.00 |
| Portland Cement I (Northwestern) | 195.00 | 198.00 |
| Water Retentive Agent (Same as Example I) | 2.00 | 2.00 |
| FK 320 DS fumed silica | 3.00 | none |
| Water (deionized) | 120 | 115 |

EXAMPLE 4

In this example, several fumed silica products of Degussa were evaluated to determine those most effective or preferred for the present invention. Those with higher sag after 60 minutes are less preferred. The composition and results of the sag test and coverage are as follows:

TABLE IV

| Ingredient (grams): | Sample | | | | |
|---|---|---|---|---|---|
| | 11 | 12 | 13 | 14 | 15 |
| Sand | 280 | 280 | 280 | 280 | 280 |
| Portland Cement (NW) | 215.35 | 216.75 | 216.5 | 215.0 | 216.5 |
| Water Retentive Agent (MHPC-6000cps viscosity) | 2.60 | 2.60 | 2.60 | 2.60 | 2.60 |
| Fumed Silica: | | | | | |
| Degussa Type | FK 320DS | Aerosil R 972 | Aerosil 130 | Supernat 50 S | Aerosil 200 |
| Level | 2.05 | 0.65 | 0.90 | 2.40 | 0.90 |
| Water (deionized) | 122.5 | 122.5 | 122.5 | 122.5 | 130.0 |
| Test Results: | | | | | |
| 30 Minutes | | | | | |
| Sag - mm | 5 | 6 | 2 | 2 | 3.5 |
| Coverage | 90 | 90 | 95 | 90 | 95 |
| 60 Minutes | | | | | |
| Sag - mm | 18 | 32 | 5.5 | 11 | 5 |
| Coverage | 95 | 95 | 95 | 95 | 99 |

## TABLE IV (Continued)

| Ingredient (grams): | Sample | | | |
|---|---|---|---|---|
| | 16 | 17 | 18 | 19 |
| Sand | 280 | 280 | 280 | 280 |
| Portland Cement (NW) | 215.5 | 212.65 | 214.9 | 215.0 |
| Water Retentive Agent (MHPC-6000cps viscosity) | 2.60 | 2.60 | 2.60 | 2.60 |
| Fumed Silica: | | | | |
| Degussa Type | FK 500 LS | Ultrasil VN 3 SP | Supernat 22 LS | Supernat 250 S |
| Level | 1.90 | 4.75 | 2.5 | 2.4 |
| Water (deionized) | 122.5 | 127.5 | 125.0 | 125.0 |

Test Results:

30 Minutes

| | | | | |
|---|---|---|---|---|
| Sag - mm | 2.0 | 5 | 2.5 | - |
| Coverage | 95 | 95 | 95 | - |

60 Minutes

| | | | | |
|---|---|---|---|---|
| Sag - mm | 4.5 | 15 | 4.5 | 14 |
| Coverage | 99 | 95 | 99 | 95 |

Claims

1. In a dry set mortar composition adapted to be mixed with water to a workable consistency containing Portland cement, a filler, a water retentive agent and an anti-sag agent, the improvement comprising about 0.1-2% of a water retentive agent which is a carbohydrate polymer selected from the group consisting of a cellulose ether and mixtures thereof with a polygalactomannan gum and about 0.1-5% of a finely divided silica, said silica providing a mortar having sag resistance.

2. A mortar composition as defined in claim 1 wherein said finely divided silica has an average agglomerate particle size less than 100μm and a surface area in the range of about 50-700 m²/g.

3. A mortar composition as defined in claim 1 wherein said finely divided silica is an amorphous, non-crystalline silica.

4. A mortar composition as defined in claim 1 wherein said cellulose ether is methyl hydroxyethyl cellulose.

5. A mortar composition as defined in claim 1 wherein said cellulose ether is methyl hydroxypropyl cellulose.

6. A mortar composition as defined in claim 1 wherein said polygalactomannam gum is guar gum.

7. A mortar composition as defined in claim 1 wherein said water retentive agent is a mixture of methylhydroxyethyl cellulose and guar gum.

8. A mortar composition as defined in claim 7 wherein the ratio by weight of said methylhydroxyethyl cellulose and guar gum is about 85:15.

9. A mortar composition as defined in claim 1 wherein said cellulose ether is selected from the group consisting of methylcellulose, hydroxyethyl cellulose, hydroxypropyl cellulose, methyl hydroxypropyl cellulose, ethylhydroxy ethyl cellulose, hydroxybutyl methyl cellulose, carboxymethyl cellulose. carboxymethyl methyl cellulose, hydroxyethyl hydroxypropyl methyl cellulose, metyl hydroxyethyl cellulose, hydroxyethylhydroxypropyl cellulose and said polygalactomannan guar is selected from the group consisting of guar and locust bean gums.

10. A dry, water mixable composition for forming with water a sag resistant mortar comprising by weight of the dry composition:

a. Portland cement in an amount of at least 20%;

b. at least 50% by weight of an inert filler;

c. a carbohydrate polymer water retentive agent selected from the group consisting of a cellulose ether and a mixture thereof with a polygalactomannan gum and comprising about 0.2-0.6%;

d. fumed silica in an amount of 0.1-0.5% by weight of the dry composition.

11. A dry, water mixable composition as defined in claim 10, wherein about 215 parts of Portland cement is employed with 280 parts sand, said water retentive agent is methyl hydroxypropyl cellulose employed in an amount of from 2.6 parts and said silica is employed in an amount of from 0.65-2.5 parts.

12. A dry, water mixable composition ad defined in claim 11 wherein said silica is an amorphours, noncrystalline silica.

13. A dry water mixable composition for forming with water a sag-resistant mortar comprising by weight;

a. about 180-225 parts of Portland cement;

b. about 270-300 parts sand:

c. about 2 parts of water-retentive agent composed of a mixture of a cellulose ether and polygalactomannan gum; and

d. about 0.6-15 parts of a fine particle size silica having an average agglomerate size of about 5μm.

14. A dry water mixable composition as defined in claim 13 wherein 195.5 parts of Portland cement is employed with 300 parts sand and said cellulose ether is methylhydroxyethyl cellulose, said polygalactomannan gum is guar gum and said fine particle size silica is employed in an amount of 2.5 parts.